# EUROPEAN PATENT APPLICATION

(11) **EP 1 746 142 A2**
(43) Date of publication of application: **24.01.2007**
(21) Application number: 06116122.0
(22) Date of filing: 27.06.2006
(51) Int. Cl.: C10B 27/06, C10B 41/08, F16K 1/20

(54) **Method of reducing polluting emissions from coke ovens, and device and valve for its implementation**

(30) Priority: 20.07.2005 IT GE20050058
(71) Applicant: PAUL WURTH S.A., 1122 Luxembourg (LU)
(72) Inventor: Pivot, Stefano, 16156 GENOVA (IT); Benzi, Francesco, 16154 GENOVA (IT)
(74) Representative: Freylinger, Ernest T.

(57) **Abstract**

Method of reducing the polluting emissions from coke ovens, comprising a battery of distillation chambers (1) each connected by a gooseneck (2) to collecting main (4) via an interposed pot valve (3) comprising the stages of detection of the oven pressure in the individual distillation chambers (1) by means of pressure sensors (S); of sending said information to proportional solenoid valves (EP) which control, by suitable means (5, 105, 403) the progressive variation of the position of the pot (103) relative to the pipe union (202) of the gooseneck (2) and therefore the progressive constriction of the opening between the gooseneck (2) and the collecting main (4) as the pressure varies in the oven.

## Description

The present invention relates to coke ovens. As is well known, the distillation chambers of batteries of coke ovens are all connected individually via pipes (called "goosenecks") to a manifold, the so-called "collecting main". The pressure inside the collecting main is critical. Normally it is maintained above atmospheric pressure, for example approx. 150 Pa, taking care that the pressure in the collecting main does not become negative, because if this were to occur air might enter the oven and cause combustion of the coke, with fusion of metallic parts and even of refractories. The reason why such a high pressure is maintained in the collecting main is that the collecting main is always connected to different ovens at different moments of the distillation time. For example, in a battery of coke ovens the collecting main communicates via the goosenecks with an oven that has just been charged, and so has a huge flow rate of distilled gas, whereas the adjacent oven is now in the 15th or 16th hour of distillation and so is practically at the end of the distillation stage, and it now has a low flow rate. There might be a pressure of the order of 350-400 Pa in the first oven, whereas at some points in the adjacent oven, for example at the bottom of the oven door where there is a draught effect due to the gooseneck, the pressure will be very close to atmospheric. Thus, if for example the pressure in the collecting main were to fall from a value of 150 Pa to a value of the order of 20 Pa, that would be advantageous for the oven in which the charge is at the start of distillation, but would be harmful for the adjacent oven which is at the end of distillation and would develop negative pressure, with the disadvantages previously mentioned. In practice, in a coke plant in which all the goosenecks are all identical, all open and so have the same loss of head, it is not possible to bring the pressure in the collecting main below a value of about 150 Pa without causing enormous pressure losses in the ovens which are now at the end of distillation.

In coke plants, at the point where the goosenecks are connected to the collecting main, a special valve is installed, called a "pot valve" because it resembles a large bowl with a hydraulic seal.

In existing coke plants, the pot valve is open throughout the distillation time. It is in fact an "on-off" valve which serves exclusively for isolating the collecting main by means of a hydraulic seal when the coke has to be discharged from the distillation chamber in question. At that time the pot valve is made to engage in the pipe union comprising the gooseneck with a hydraulic pressure head so as to permit the coke to be discharged, while preventing the gas present in the collecting main from escaping into the environment.

It had been proposed in the past to use this pot valve as a device for manual control of the flow rate from the ovens into the collecting main, so as to keep the pressure in the collecting main more or less constant by manually constricting the opening between the gooseneck and the collecting main.
However, this known system is not reliable and requires skilled manpower for its operation.

Effecting this control with a hydraulic system has also been proposed by Deutsche Montantechnologie GmbH and by Thyssen Krupp Stahl AG, in practice with a variable-level hydraulic seal, in such a way that constriction is provided by a head of water, the level of which is regulated during operation of the oven.
This system, though reliable, requires considerable structural modification of existing plant.

Therefore the main aim of the present invention is to decouple the pressure of the collecting main from that of each individual oven in a simple manner, without having to make extensive modifications to plant that is currently in operation.

This aim is achieved by replacing the solenoid valve controlling the on-off operation of the pot valve, keeping it open throughout the distillation time and only making it close at the time of discharge with a proportional solenoid valve actuated by a sensor of the pressure of the oven to which said valve is connected, so as to vary the position of the pot valve, and hence the constriction of the gooseneck, as a function of the pressure variation in the oven, which is in its turn a function of the distillation time.

Advantageously, said proportional valve is coupled with a positional transducer to show the position of the pot valve at any given moment.

According to a further characteristic, the present invention relates to a particular profile of the pot, which has been designed in such a way that the latter does not give rise to resonances and various fluctuations. For this purpose, a block formed from a hollow metal structure with a curvature designed to follow the movement of the pot has been mounted on an existing pot.

Further aims and characteristics of the present invention will become clearer from the following description of a preferred embodiment of the invention, illustrated in the appended drawings, in which:
Fig. 1 shows a top view of the detail of a gooseneck of a distillation chamber of a coke oven connected to the collecting main;
Fig. 2 shows in longitudinal section, on an enlarged scale, a detail of the assembly in Fig. 1, illustrating the pot valve for controlling the opening between the gooseneck and the collecting main, in the fully open position.
Fig. 3 is a view similar to that of Fig. 2, showing the pot valve in a position of partial constriction of the opening between the gooseneck and the collecting main, and
Fig. 4 is a view similar to those of Figs. 2 and 3 with the pot valve in a position of complete closure of the opening between the gooseneck and the collecting main.

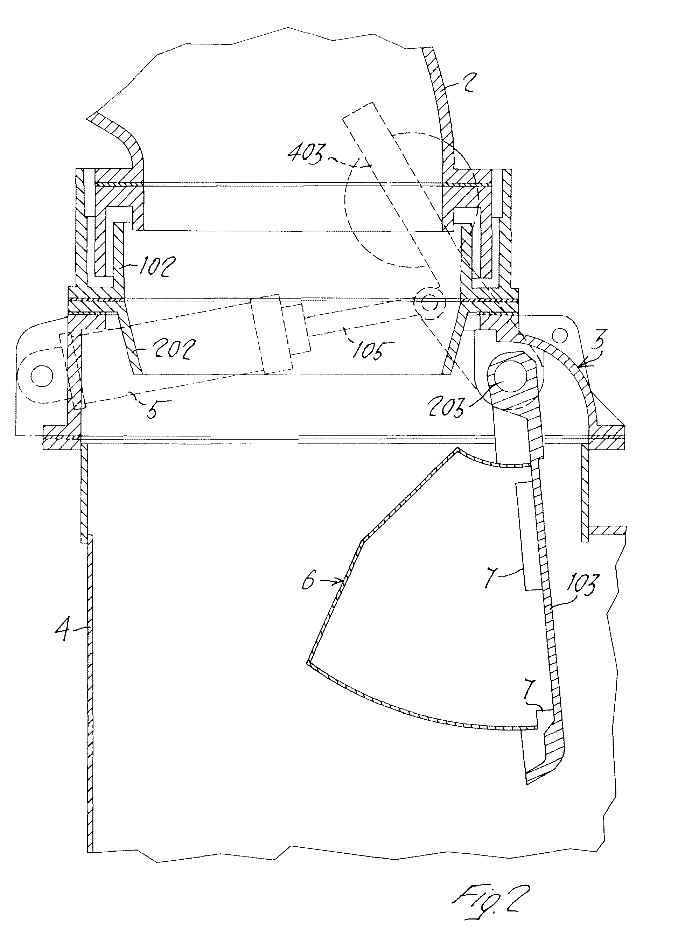

Although in Figs. 2 to 4 the pot valve is shown as being provided with a hollow metal structure or "block", it is to be understood that said structure can also be absent.

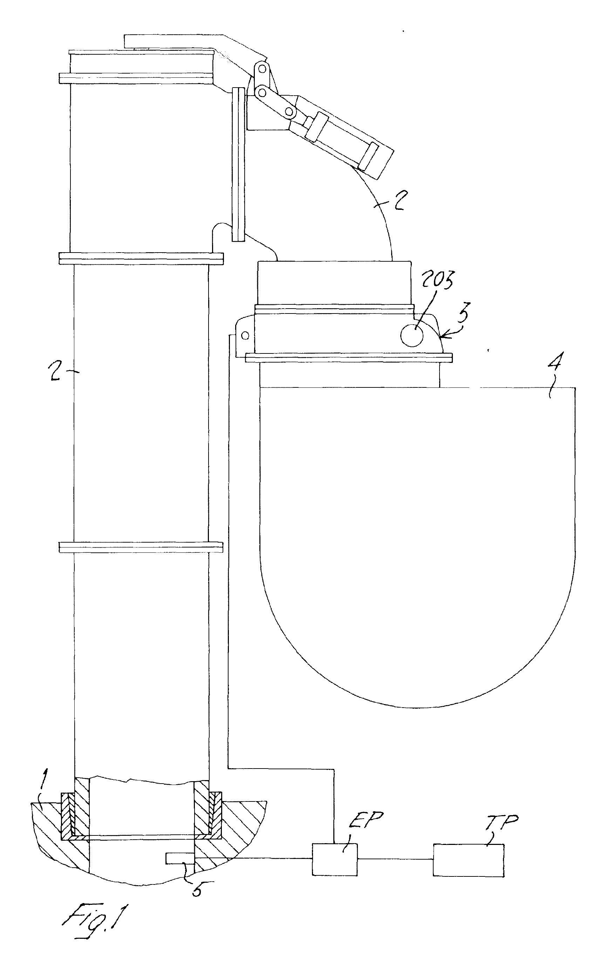

Referring to the drawings, and with special reference to Fig. 1, the numeral 1 indicates a fragment of the roof of a distillation chamber of a coke oven, from which the gooseneck 2 is connected, via the interposed pot valve 3, to the collecting main 4.

Referring to Fig. 2 of the drawings, the end of the gooseneck 2 is connected to the pipe union 102 provided with a truncated-cone end 202 that fits into collecting main 4.

The pot valve, indicated in its entirety as 3, comprises the stopping element or pot proper 103, generally comprising a circular plate with raised edges with inside diameter such as to permit insertion therein of the truncated-cone end 202 of the pipe union 102.

The pot 103 is connected at one end to a pin 203 supported in an oscillating manner by the casing of valve 3. In its turn, pin 203 is provided at its end with a lever 403 hinged to the end of the rod 105 of the piston of a hydraulic jack 5.

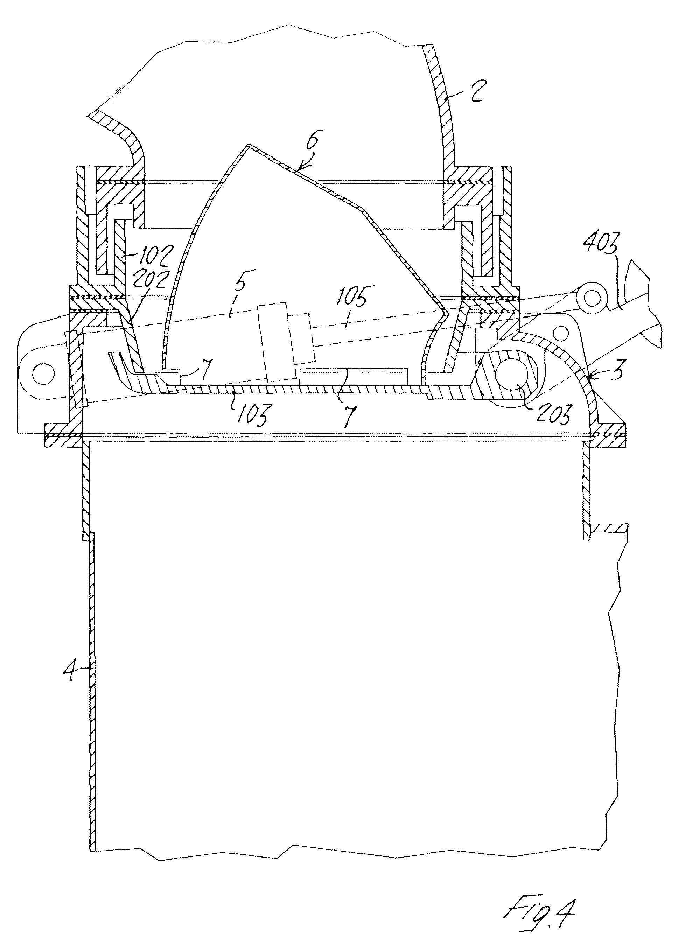

As is well known, normally the pot valve is a valve with on-off action, that is, either it is operated by a solenoid valve in the fully open position, as shown in Fig. 2 in the drawings, or it is operated in the fully closed position (position in Fig. 4 in the drawings).

In accordance with the present invention, the solenoid valve controlling the on-off operation of pot valve 3 has been replaced with a proportional solenoid valve EP controlled by a sensor S of the pressure of the oven to which said valve EP is connected, so as to vary the position of the pot valve 3, and therefore the constriction of the gooseneck 2, with the variation of the pressure in the oven, which is in its turn a function of the distillation time.

Advantageously, said proportional valve EP is coupled to a positional transducer TP to enable the position of the pot valve 3 to be known at any given moment.

In this way it is possible to have a reduced pressure in collecting main 4, for example a pressure of 10 Pa, i.e. a pressure that is very close to the ambient pressure so that when the pressure in an oven rises to 300-350 Pa, complete opening of the pot valve 3 is operated by means of a signal of the pressure detected in the oven by the sensor S, allowing the gas to pass completely.

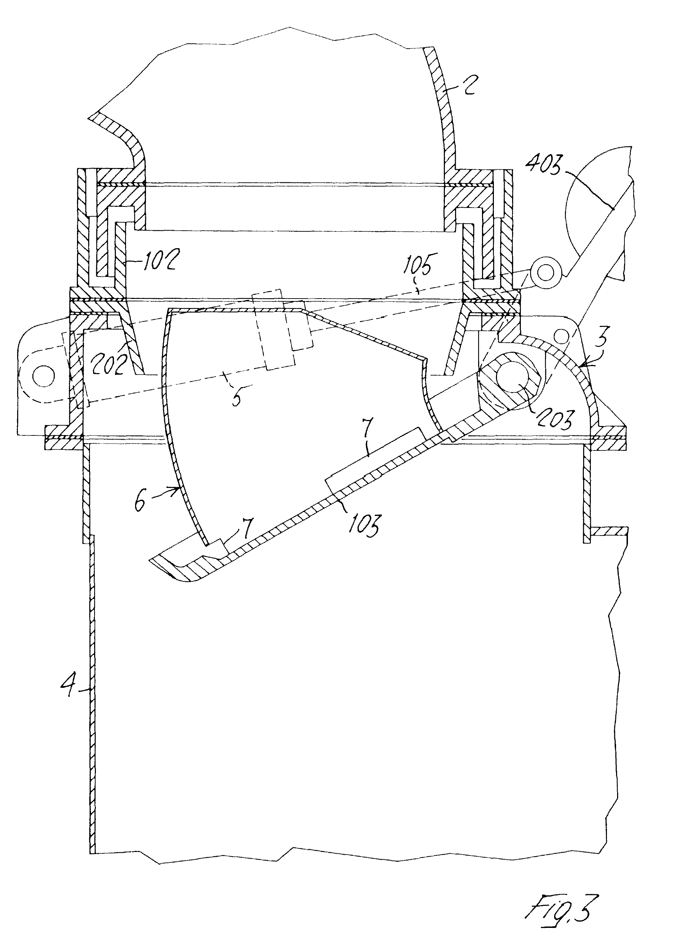

With operation in this manner, there is no risk of negative pressure arising, since the oven that has just been charged develops a tremendous pressure and the pressure of the collecting main 4 will be low but controlled to values capable of maintaining a certain excess pressure in the distillation oven. As distillation proceeds, the flow rate of oven distillate decreases and therefore the oven pressure also decreases. This decrease is detected by the pressure sensor S which gradually causes pot valve 3 to close (position in Fig. 3). At the end of distillation, the flow of distillate is so reduced that the pot 3 remains in the almost-closed position, with a minimal gradient, barely sufficient to cause draining of the water that falls on it continually and maintaining a small slit for passage of the gas, production of which has practically ceased.

According to a further characteristic, the present invention relates to the profile of pot 103. For this purpose, a curved tubular metal structure 6 (shown in Figs. 2 to 4) has been mounted on pot 103 and has a curvature such that it follows the movement of pot 103.

Said structure 6 has, preferably at the base, openings 7 to allow the condensed water to flow freely into the well of pot 3, so as to produce the necessary hydraulic pressure head.

Owing to this structure, there is much better control both of the pressure and of the flow rate of the gases entering the collecting main 4.

Of course, the present invention is not limited to the embodiments that have been illustrated and described, but comprises all variants and modifications falling within the wider scope of the innovative concept, as claimed hereunder.

## Claims

1. Method of reducing the polluting emissions from coke ovens, comprising a battery of distillation chambers (1) each connected by a gooseneck (2) to collecting main (4) via an interposed pot valve (3) comprising the stages of detection of the oven pressure in the individual distillation chambers (1) by means of pressure sensors (S); of sending said information to proportional solenoid valves (EP) which control, by suitable means (5, 105, 403) the progressive variation of the position of the pot (103) relative to the pipe union (202) of the gooseneck (2) and therefore the progressive constriction of the opening between the gooseneck (2) and the collecting main (4) as the pressure varies in the oven.

2. Method according to Claim 1 in which the proportional solenoid valve (EP) is coupled to a positional transducer (TP).

3. Pot valve for carrying out the method as in the preceding claims provided at the level of the pot (103) with a curved tubular metal structure (6) with a curvature such that it follows the movement of the pot (103), said structure (6) being provided preferably at the base with openings (7) to allow the water of the hydraulic seal to flow freely into the well of the pot (103).

4. Pot valve according to Claim 3, comprising means (5, 105, 403) for controlling the progressive variation of the position of the pot (103) relative to the pipe union of the gooseneck (2).

5. Pot valve according to Claim 4, in which said pot is supported in an oscillating manner by a pin (203) at one end of which a lever (403) is connected, hinged to the end of the rod (105) of the piston of a hydraulic jack (5).

6. Method of reducing the polluting emissions from coke ovens, and device and valve for its implementation, substantially as described and illustrated in Figs. 1 to 4 of the appended drawings.
